# EUROPÄISCHE PATENTANMELDUNG

(11) **EP 2 929 808 A1**
(43) Veröffentlichungstag der Anmeldung: **14.10.2015**
(21) Anmeldenummer: 14182737.8
(22) Anmeldetag: 28.08.2014
(51) Int. Cl.: A47B 97/00, H02J 5/00, A47B 21/06, A47B 13/02, A47B 96/14

(54) **Energiespeicher für Möbel sowie Möbel mit Energiespeicher**

(30) Priorität: 09.04.2014 DE 202014101674 U
(71) Anmelder: Nitz engineering GmbH, 39042 Brixen (IT)
(72) Erfinder: Nitz, Rüdiger, 39040 Feldthurns (Bz) (IT)
(74) Vertreter: 2s | ip Schramm Schneider Patentanwälte Rechtsanwälte

(57) **Zusammenfassung**

Bereit gestellt wird ein Möbel (10), insbesondere Tisch, Stehtisch oder Schreibtisch, wobei an oder in dem Möbel ein Speichermodul (20) zum Speichern von elektrischer Energie und zur Abgabe der gespeicherten elektrischen Energie an ein an dem Möbel anordenbaren elektrischen Gerät anordenbar ist. Das Speichermodul (20) ist vorzugsweise in einer verschließbaren / absperrbaren Aussparung (15) anordenbar. Vorzugsweise ist das Speichermodul (20) mit Übertragungsmitteln (40,50) koppelbar, die angepasst sind, die von dem Speichermodul (20) abgegebene elektrische Energie an das an dem Möbel (10) anordenbaren elektrische Gerät zu übertragen. Die Übertragungsmittel (40,50) umfassen vorzugsweise ein induktives Ladesystem. Bereit gestellt werden ferner ein entsprechendes Speichermodul (20) für ein Möbel (10) sowie ein Möbelsystem, umfassend ein erfindungsgemäßes Möbel (10) und zumindest ein erfindungsgemäßes Speichermodul (20).

## Beschreibung

### Gegenstand der Erfindung

Die Erfindung betrifft ein Speichermodul bzw. Energiespeicher für ein Möbel, mit dem an oder auf dem Möbel anordenbare elektrische Geräte, etwa Smartphones aufgeladen werden können, sowie ein hierzu angepasstes Möbel. Ferner betrifft die Erfindung ein Möbelsystem mit einem erfindungsgemäßen Möbel und einem erfindungsgemäßen Speichermodul.

### Stand der Technik und Hintergrund der Erfindung

Im Stand der Technik sind Möbel bekannt, in die Komponenten einer Ladeeinrichtung integriert sind, die ein Aufladen eines auf dem Möbel abgelegten elektrischen Gerätes, etwa ein Smartphone, ermöglichen.

Derartige Möbel sind beispielsweise aus der DE 20 2012 101 236 U1 oder aus der DE 20 2012 104 775 U1 bekannt. Dort ist an der Unterseite einer Möbelplatte eine Aussparung vorgesehen, in die Komponenten eines induktiven Ladesystems anordenbar sind, um ein auf der Möbelplatte abgelegtes elektrisches Gerät induktiv aufzuladen.

Nachteilig hierbei ist allerdings, dass diese induktiven Ladesysteme selbst mit elektrischer Energie versorgt werden müssen, um einerseits selbst betrieben werden zu können und um andererseits elektrische Energie für die induktive Energieübertragung bereitstellen zu können. Hierzu ist es bekannt, die in die Möbelplatte integrierten induktiven Ladesysteme mit einem elektrischen Kabel an eine externe Stromversorgung, etwa eine Wandsteckdose, anzuschließen.

Nachteilig hierbei ist allerdings, dass das in das Möbel integrierte induktive Ladesystem nur dann genutzt werden kann, wenn eine solche externe Stromversorgung zur Verfügung steht und das Anschlusskabel eine entsprechende Länge aufweist. Ein weiterer Nachteil besteht darin, dass solche Kabel zur Stromversorgung des induktiven Ladesystems ein gewisses Hindernis (z.B. Stolpergefahr) bilden.

Ferner ist das Vorsehen solcher Kabel für die Stromversorgung der induktiven Ladesysteme in vielen Fällen nicht möglich, beispielsweise bei Stehtischen in einer Kneipe oder in einer Bar, weil zu jedem Tisch ein entsprechendes Kabel zur Stromversorgung zugeführt werden müsste. Denkbar wäre, dass bei solchen Stehtischen im Fußboden eingelassene Steckdosen vorgesehen werden, in denen die jeweiligen Kabel eingesteckt werden können. Dies hat allerdings wiederum zum Nachteil, dass die Stehtische weitgehend dort stehen müssen, wo die in dem Fußboden eingelassenen Steckdosen angeordnet sind, sodass eine weitgehend flexible Anordnung der Stehtische nahezu unmöglich ist.

### Aufgabe der Erfindung

Aufgabe der vorliegenden Erfindung ist es daher, Lösungen bereitzustellen, die einen flexibleren Einsatz eines Möbels mit darin integrierten induktiven Ladesystemen ermöglichen und weitgehend unabhängig von externen Stromversorgungseinrichtungen sind.

### Erfindungsgemäße Lösung

Diese Aufgabe wird erfindungsgemäß durch ein Möbel, insbesondere Tisch, Stehtisch oder Schreibtisch, durch ein Speichermodul für ein erfindungsgemäßes Möbel sowie ein Möbelsystem nach den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach ein Möbel, insbesondere Tisch, Stehtisch oder Schreibtisch, wobei an oder in dem Möbel ein Speichermodul zum Speichern von elektrischer Energie und zur Abgabe der gespeicherten elektrischen Energie an ein an dem Möbel anordenbaren elektrischen Gerät anordenbar ist.

Damit wird in vorteilhafter Weise vermieden, dass in das Möbel integrierte Module zum Aufladen eines an dem Möbel abgelegten elektrischen Geräts an eine externe Stromversorgung, beispielsweise über ein Kabel an eine Steckdose, angeschlossen werden müssen. Das Möbel kann so unabhängig von der externen Stromversorgungseinheit platziert werden, was einen flexibleren Einsatz des Möbels ermöglicht.

In einer vorteilhaften Ausgestaltung weist das Möbel eine Aussparung oder ein Durchgangsloch auf, in der bzw. in dem das Speichermodul anordenbar ist. Vorzugsweise ist das Speichermodul lösbar in der Aussparung bzw. in dem Durchgangsloch anordenbar. Damit wird es in vorteilhafter Weise möglich, das Speichermodul beispielsweise auszutauschen und durch ein neues bzw. aufgeladenes Speichermodul zu ersetzen. Damit kann zudem vermieden werden, dass das Möbel zum Aufladen des Speichermoduls an eine externe Stromversorgung angeschlossen werden muss.

In oder an dem Möbel können Übertragungsmittel anordenbar sein bzw. angeordnet sein, die angepasst sind, die von dem Speichermodul abgegebene elektrische Energie an das an dem Möbel anordenbare elektrische Gerät zu übertragen.

Die Übertragungsmittel können einen Transmitter eines induktiven Ladesystems oder einen Anschluss für ein Ladekabel des elektrischen Geräts umfassen.

In dem Möbel sind vorzugsweise elektrische Leitungen angeordnet, die das Speichermodul mit den Übertragungsmitteln elektrisch verbinden.

In der Aussparung bzw. in dem Durchgangsloch des Möbels können Anschlusskontakte angeordnet bzw. vorgesehen sein, die mit Anschlusskontakten des Speichermoduls korrespondieren und mit diesen zusammenwirken, wenn das Speichermodul in der Aussparung bzw. in dem Durchgangsloch angeordnet ist. Damit wird ein besonders einfacher Austausch des Speichermoduls ermöglicht.

Die in der Aussparung bzw. in dem Durchgangsloch angeordneten Anschlusskontakte können mit den elektrischen Leitungen gekoppelt sein.

In einer vorteilhaften Ausgestaltung der Erfindung ist die Aussparung bzw. zumindest eine Seite des Durchgangsloches mit einer Abdeckplatte abdeckbar und/oder verschließbar bzw. abschließbar. Die Abdeckplatte kann hierbei Teil des Speichermoduls sein.

Die Abdeckplatte kann ferner Arretiermittel aufweisen, mit denen die Abdeckplatte am Möbel, insbesondere an oder in der Aussparung bzw. an oder in dem Durchgangsloch, arretierbar ist. Vorzugsweise umfassen die Arretiermittel Absperrmittel, insbesondere ein Schloss. Damit kann die Abdeckplatte abgesperrt werden, sodass einem unberechtigten Entfernen des Speichermoduls wirksam entgegengewirkt werden kann.

In einer Ausgestaltung der Erfindung können an dem Möbel Anschlussmittel zum Anschließen des Möbels an eine externe Stromversorgung vorgesehen sein. Das ist insbesondere bei stationären Möbel, etwa Bücherregale, Arbeitsplatten oder dergleichen, die nicht flexibel im Raum anordenbar sein müssen, vorteilhaft.

Die Anschlussmittel können elektrisch mit dem Speichermodul verbunden sein, wenn das Speichermodul in der Aussparung bzw. in dem Durchgangsloch angeordnet ist. Damit kann das Speichermodul aufgeladen werden, was insbesondere dann vorteilhaft ist, wenn das Speichermodul fest in das Möbel integriert ist, d.h. nicht von dem Möbel gelöst werden kann.

Des Weiteren wird durch die Erfindung ein Speichermodul für ein Möbel, insbesondere für ein erfindungsgemäßes Möbel bereitgestellt, wobei das Speichermodul angepasst ist, zum Speichern von elektrischer Energie und zur Abgabe der gespeicherten elektrischen Energie an ein Endgerät, das an oder auf dem Möbel anordenbar ist, wobei das Speichermodul in das Möbel integrierbar ist und mit im oder am Möbel angeordneten Übertragungsmittel, die angepasst sind, die von dem Speichermodul abgegebene elektrische Energie an das an oder auf dem Möbel angeordnete elektrische Gerät zu übertragen, elektrisch koppelbar ist.

Das Speichermodul kann über im Möbel angeordnete elektrische Leitungen mit den Übertragungsmitteln elektrisch koppelbar sein.

In einer Ausgestaltung der Erfindung kann das Speichermodul auf induktiver Basis mit den Übertragungsmitteln elektrisch koppelbar sein. Hierbei ist es vorteilhaft, wenn das Speichermodul zumindest eine Transmitterspule aufweist, über die die elektrische Energie des Speichermoduls an die Übertragungsmittel übertragen wird.

Vorteilhaft ist es, wenn an dem Speichermodul eine Abdeckplatte angeordnet ist.

Die Abdeckplatte kann hinsichtlich ihrer Abmessungen angepasst sein, beim Anordnen des Speichermoduls in einer Aussparung oder in einem Durchgangsloch des

Möbels die Aussparung bzw. zumindest eine Seite des Durchgangsloches zu verschließen bzw. abzudecken.

Die Abdeckplatte kann Arretiermittel aufweisen, mit denen die Abdeckplatte am Möbel, insbesondere an oder in der Aussparung bzw. an oder in dem Durchgangsloch arretierbar ist.

Die Arretiermittel können ein Absperrmittel, insbesondere ein Schloss, umfassen, mit dem die Abdeckplatte abgeschlossen werden kann.

In einer Ausgestaltung der Erfindung kann die Abdeckplatte an einem Gehäuse des Speichermoduls angeordnet sein.

Vorteilhaft ist es, wenn das Speichermodul mit einer externen Ladeeinrichtung verbindbar ist, um das Speichermodul aufzuladen.

In einer Ausgestaltung der Erfindung kann das Speichermodul eine interne Ladeeinrichtung aufweisen, die mit einer externen Stromversorgung verbindbar ist, um das Speichermodul aufzuladen.

Das Speichermodul kann Anschlusskontakte aufweisen, die mit in der Aussparung bzw. in dem Durchgangsloch des Möbels angeordneten Anschlusskontakten korrespondieren und mit diesen zusammenwirken, wenn das Speichermodul in der Aussparung bzw. in dem Durchgangsloch angeordnet ist, wobei die Anschlusskontakte vorzugsweise mit den im oder am Möbel angeordneten Übertragungsmittel elektrisch gekoppelt sind.

Das Speichermodul kann ein Signalisierungsmittel aufweisen, das angepasst ist, einen Ladungszustand des Speichermoduls zu signalisieren. Damit kann bei einem in das Möbel integrierten Speichermodul von außen festgestellt werden, welchen Ladungszustand das Speichermodul aufweist, ohne das Speichermodul abnehmen bzw. demontieren zu müssen.

In einer Ausgestaltung der Erfindung kann das Signalisierungsmittel an der Abdeckplatte angeordnet sein und vorzugsweise eine lichtemittierende Diode umfassen.

In einer Ausgestaltung der Erfindung kann das Speichermodul eine Anzahl von seriell und/oder parallel verschalteten Speichermittel, insbesondere Akkumulatoren, aufweisen, die vorzugsweise in einem Gehäuse angeordnet sind.

Vorteilhaft ist es, wenn in der Abdeckplatte Belüftungslöcher und/oder Belüftungsschlitze vorgesehen sind, insbesondere um Wärmeenergie des Speichermoduls abzuführen.

Des Weiteren wird durch die Erfindung eine elektronische Komponente zur induktiven Übertragung von elektrischer Energie an ein relativ zur elektronischen Komponente anordenbares elektrisches Gerät bereit gestellt, insbesondere zum Aufladen eines Energiespeichers des elektrisches Gerätes, wobei die elektronische Komponente einen Transmitter einer induktiven Ladeeinrichtung und ein Speichermodul umfasst, wobei das Speichermodul angepasst ist, zum Speichern von elektrischer Energie und zur Abgabe der gespeicherten elektrischen Energie an den Transmitter.

Vorteilhaft ist es, wenn das Speichermodul lösbar an dem Transmitter anordenbar ist.

Der Transmitter kann eine Transmitterspule aufweisen, wobei die Transmitterspule an einer Oberseite, die während des Aufladens des elektrischen Geräts dem elektrischen Gerät zugewandt ist, eines Gehäuses der elektronischen Komponente angeordnet ist und wobei das Speichermodul an einer Unterseite des Gehäuses angeordnet ist.

Vorteilhaft ist es, wenn die Oberseite des Gehäuses ein stabiles und zumindest teilweise nicht-metallisches Material aufweist.

An der Oberseite des Gehäuses kann eine Abdeckplatte angeordnet sein.

Die Abdeckplatte kann zumindest teilweise über den Außenumfang des Gehäuses hinausragen.

Die elektronische Komponente kann Anschlussmittel aufweisen, zum Anschließen des Speichermoduls an eine externe Stromversorgung oder an eine Ladevorrichtung zum Aufladen des Speichermoduls.

Die elektronische Komponente kann zumindest teilweise in einer Aussparung oder in einem Durchgangsloch einer Möbelplatte eines Möbels anordenbar, vorzugsweise lösbar anordenbar sein.

Ferner wird durch die Erfindung ein Möbelsystem, umfassend ein Möbel, insbesondere ein erfindungsgemäßes Möbel, und zumindest ein Speichermodul oder eine elektronische Komponente, insbesondere ein erfindungsgemäßes Speichermodul oder eine erfindungsgemäße elektronische Komponente, wobei das zumindest eine Speichermodul oder die zumindest eine elektronische Komponente in das Möbel integrierbar ist.

In einer Ausgestaltung des erfindungsgemäßen Möbelsystems kann das Speichermodul lösbar in einer Aussparung oder in einem Durchgangsloch des Möbels anordenbar sein.

In einer alternativen Ausgestaltung des erfindungsgemäßen Möbelsystems kann das Speichermodul unlösbar in das Möbel integriert sein, wobei das Möbel Anschlussmittel aufweist, um das Speichermodul zum Aufladen an eine externe Stromversorgung anzuschließen.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- Fig. 1: ein erfindungsgemäßes Möbel mit einem erfindungsgemäßen Speichermodul in einer Seitenansicht und in zwei perspektivischen Ansichten;
- Fig. 2: ein erfindungsgemäßes Speichermodul in einer Seitenansicht und in einer perspektivischen Ansicht;
- Fig. 3: eine Schnittansicht eines erfindungsgemäßen Möbels mit einem darin integrierten erfindungsgemäßen Speichermodul;
- Fig. 4: eine Schnittansicht eines weiteren erfindungsgemäßen Möbels mit einem darin integrierten bzw. an dem Möbel angeordneten erfindungsgemäßen Speichermoduls;
- Fig. 5: ein an einer Möbelplatte angeordnetes erfindungsgemäßes Speichermodul, welches einem Übertragungsmittel zum Aufladen von elektrischen Geräten die hierfür notwendige elektrische Energie auf induktiver Basis bereitstellt; und
- Fig. 6: Ausführungsbeispiele einer erfindungsgemäßen elektronischen Komponente.

### Detaillierte Beschreibung der Erfindung

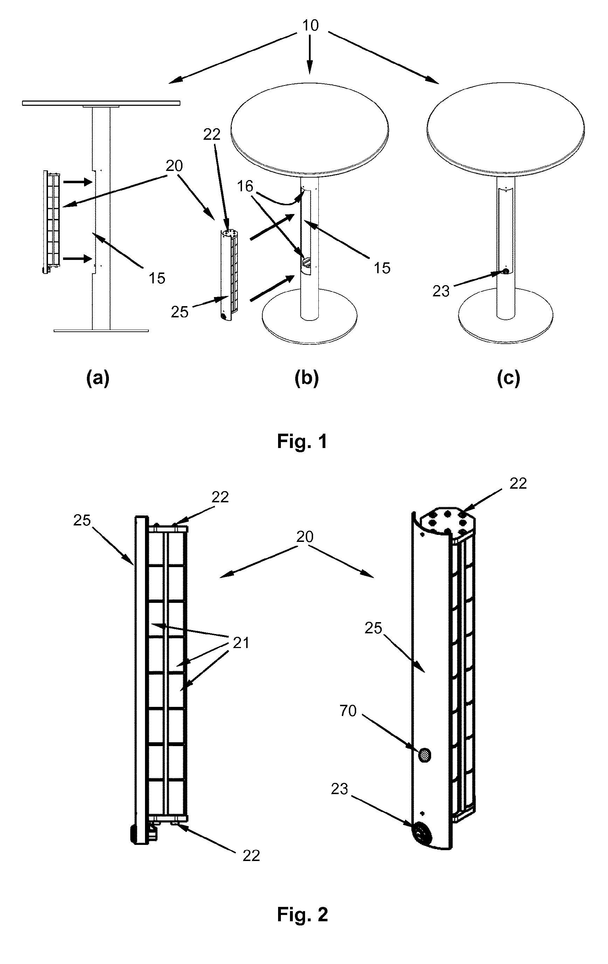

Fig. 1 zeigt ein erfindungsgemäßes Möbel und ein erfindungsgemäßes Speichermodul in einer Seitenansicht (a) und in zwei perspektivischen Ansichten (b) und (c).

Das erfindungsgemäße Möbel 10 ist in der in Fig. 1 gezeigten Ausführungsform ein Stehtisch, wie er beispielsweise in Bars bzw. Kneipen verwendet wird. Der Stehtisch weist ein Tischbein auf, an dessen oberen Ende eine Tischplatte und an dessen unteren Ende ein Tischfuß angeordnet sind.

Das Tischbein weist einen bestimmten Durchmesser auf, sodass genügend Platz vorhanden ist, um in dem Tischbein ein erfindungsgemäßes Speichermodul 20 anordnen zu können. Das Tischbein weist bei der in Fig. 1 gezeigten Ausgestaltung eine längliche Aussparung 15 auf, die den Aufnahmeraum zur Aufnahme eines erfindungsgemäßen Speichermoduls 20 bildet.

Erfindungsgemäß sind die Aussparung 15 und das Speichermodul 20 so ausgestaltet, dass das Speichermodul 20 zur Inbetriebnahme lediglich in die Aussparung 15 eingeschoben werden muss. Hierzu sind in der Aussparung 15 Anschlusskontakte 16 vorgesehen, die mit Anschlusskontakten 22 des Speichermoduls 20 korrespondieren und mit diesen zusammenwirken, wenn das Speichermodul 20 in der Aussparung 15 angeordnet ist. Damit wird eine werkzeuglose Montage bzw. Demontage des erfindungsgemäßen Speichermoduls 20 möglich.

Das erfindungsgemäße Speichermodul 20 weist eine Abdeckplatte 25 auf, mit der nach dem Einschieben des Speichermoduls 20 in die Aussparung 15 die Aussparung 15 weitgehend abgedeckt wird. Vorzugsweise ist die Abdeckplatte 15 so ausgestaltet, dass die ursprüngliche Oberfläche des Tischbeins wieder hergestellt wird, wie in Abbildung (c), die ein Möbel mit einem integrierten Speichermodul zeigt, zu sehen ist.

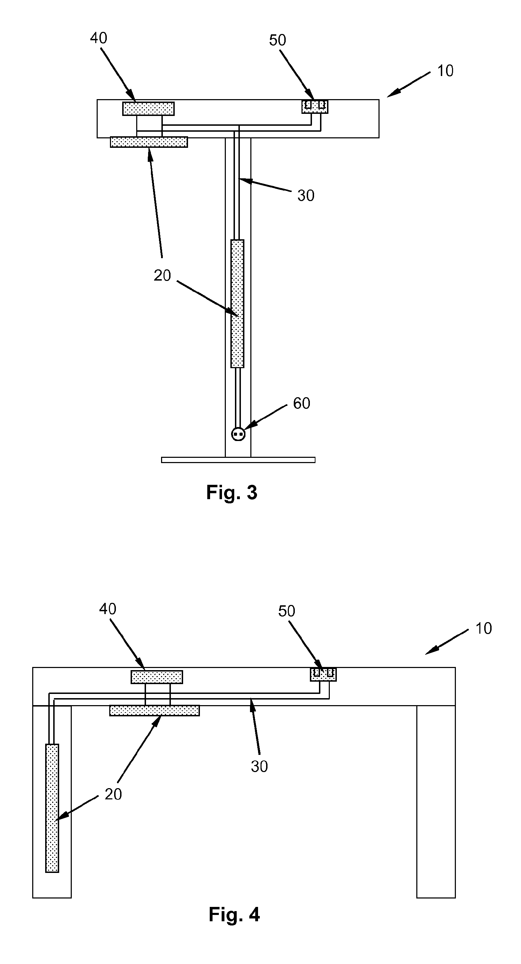

Nachdem das erfindungsgemäße Speichermodul 20 in das Tischbein integriert wurde bzw. in die Aussparung 15 eingeschoben wurde, kann das Speichermodul elektrische Energie zum Aufladen eines an dem Tisch abgelegten elektrischen Gerätes abgeben. Eine Ausgestaltung eines Tisches, der angepasst ist, auf dem Tisch abgelegte elektrische Geräte aufzuladen, wird mit Bezug auf Fig. 3, Fig. 4 und Fig. 5 näher beschrieben.

Vorteilhaft des erfindungsgemäßen Möbels 10 mit einem integrierten bzw. integrierbaren Speichermodul 20 ist, dass an bzw. auf dem Möbel 10 angeordnete elektrische Geräte aufgeladen werden können, ohne dass hierzu eine externe Stromversorgung notwendig ist bzw. ohne dass hierzu das Möbel bzw. die in dem Möbel integrierten Ladeeinrichtungen an eine externe Stromversorgung angeschlossen werden müssen. Damit wird die Flexibilität des Möbels, beispielsweise hinsichtlich der Anordnung des Möbels in einem Raum, erheblich erhöht. Denn das erfindungsgemäße Möbel kann ohne Berücksichtigung irgendwelcher externer Stromversorgungseinheiten, beispielsweise Steckdosen, in dem Raum angeordnet bzw. aufgestellt werden.

In Fig. 2 ist als erfindungsgemäßes Möbel ein Stehtisch gezeigt. Erfindungsgemäß kann ein erfindungsgemäßes Speichermodul 20 in jedes beliebige Möbel, beispielsweise Bücherregale, Arbeitsplatten oder sonstige Möbel, auf denen elektrische Geräte abgelegt werden können, integriert werden. Ein Anwendungsfall wäre beispielsweise die Integration von erfindungsgemäßen Speichermodulen in die Esstische eines FastFood-Restaurants, wobei die Esstische angepasst sind, beim Ablegen eines elektrischen Gerätes dieses drahtlos aufzuladen, beispielsweise mittels einer induktiven Ladeeinrichtung, wie beispielsweise in dem Eingangs genannten Stand der Technik beschrieben.

**Fig. 2** zeigt ein erfindungsgemäßes Speichermodul 20 in einer Seitenansicht und in einer perspektivischen Ansicht.

Das Speichermodul 20 besteht aus einer Anzahl von Speichermitteln, beispielsweise Akkumulatoren 21, die seriell und/oder parallel verschaltet sind. Die Speichermittel 21 können in einem hier nicht gezeigten Gehäuse angeordnet sein.

Das Speichermodul weist an dem oberen Ende und an dem unteren Ende Anschlusskontakte 22 auf, die mit Anschlusskontakten 16 in der Aussparung 15 des Möbels 10 korrespondieren und mit diesen zusammenwirken, wenn das Speichermodul 20 in der Aussparung 15 angeordnet ist. Damit wird ein aufwendiges Anschließen des Speichermoduls, beispielsweise mittels Steckkontakten vermieden, was eine einfache und effiziente Montage bzw. Demontage des Speichermoduls ermöglicht. Das Speichermodul 20 muss einfach in die Aussparung 15 eingeschoben werden.

Das Speichermodul 20 weist eine Abdeckplatte 25 auf, die angepasst ist, die Aussparung 15 des Möbels 10 abzudecken bzw. abzuschließen. Dabei ist die Abdeckplatte 25 vorzugsweise so ausgestaltet, dass diese die ursprüngliche Oberfläche des Möbels im Bereich der Aussparung 15 wiederherstellt, sodass nach dem Einbringen des Speichermoduls 20 in die Aussparung 15 des Möbels 10 der ästhetische Gesamteindruck des Möbels 10 nicht nachteilig beeinflusst wird. Vorzugsweise ist die Abdeckplatte 25 aus dem gleichen Material hergestellt wie der Bereich des Möbels, der die Aussparung 15 aufweist.

In einer hier nicht gezeigten Ausgestaltung kann die Abdeckplatte 25 eine Anzahl von Bohrungen bzw. Schlitze aufweisen, die als Belüftungslöcher bzw. Belüftungsschlitze dienen. Damit kann beim Betrieb des Speichermoduls überschüssige Wärmeenergie abgeführt werden, um ein Überhitzen des in der Aussparung 15 angeordneten Speichermoduls zu verhindern.

An der Abdeckplatte 25 kann in einer besonderen Ausgestaltung des erfindungsgemäßen Speichermoduls 20 ein Signalisierungsmittel 17 angeordnet sein, mit dem der Ladezustand des Speichermoduls signalisiert werden kann. Als Signalisierungsmittel 17 kann beispielsweise eine lichtemittierende Diode (LED) verwendet werden. In einer Ausgestaltung kann die lichtemittierende Diode dann leuchten, wenn die Kapazität des Speichermoduls einen vorbestimmten Schwellenwert unterschreitet, was durch geeignete Elektronik in dem Speichermodul 20 festgestellt werden kann. In einer Ausgestaltung kann die lichtemittierende Diode grün leuchten, wenn die Kapazität des Speichermoduls über einen vorbestimmten Schwellenwert liegt, und beispielsweise rot leuchten, wenn die Kapazität den vorbestimmten Schwellenwert unterschreitet. Damit kann auf einfache Weise von außen festgestellt werden, ob ein Austausch bzw. ein Aufladen des Speichermoduls 20 nötig ist. Unterschreitet die Kapazität des Speichermoduls den vorbestimmten Schwellenwert, kann das Speichermodul 20 besonders einfach durch ein anderes bzw. neues Speichermodul ausgewechselt werden. Das entnommene Speichermodul 20 kann dann mit einer geeigneten Ladeeinrichtung wieder aufgeladen werden.

Eine durch die Erfindung bereitgestellte Ladeeinrichtung zum Aufladen eines erfindungsgemäßen Speichermoduls ist vorzugsweise so ausgestaltet, dass das erfindungsgemäße Speichermodul lediglich in die Ladeeinrichtung gesteckt werden muss, so wie das Speichermodul 20 in die Aussparung 15 des Möbels 10 eingeschoben wird.

In einer alternativen Ausgestaltung der Erfindung kann das Speichermodul 20 eine integrierte Ladeeinrichtung bzw. eine zum Aufladen des Speichermoduls vorgesehene Ladeelektronik aufweisen, sodass das Speichermodul 20 lediglich an eine externe Stromversorgung, beispielsweise an eine Steckdose, angeschlossen werden muss. Hierfür kann das Speichermodul einen entsprechenden Steckplatz aufweisen, in dem ein Ladekabel eingesteckt werden kann.

Bei der in Fig. 2 gezeigten Ausgestaltung des Speichermoduls 20 ist an der Abdeckplatte 25 ein Arretiermittel 23 angeordnet, mit dem das in die Aussparung 15 eingesteckte Speichermodul an dem Möbel arretiert werden kann. Vorzugsweise ist das Arretiermittel 23 als Schloss ausgestaltet, um eine unberechtigte Entnahme bzw. Demontage des Speichermoduls 20 von dem Möbel zu verhindern.

**Fig. 3** zeigt ein erfindungsgemäßes Möbel 10 in einem Querschnitt. Das erfindungsgemäße Möbel ist hier als Stehtisch 10 ausgebildet.

In dem Tischbein des Stehtisches 10 ist das erfindungsgemäße Speichermodul 20 integriert, das über elektrische Leitungen 30 mit Übertragungsmittel 40, 50 elektrisch verbunden ist. Die Übertragungsmittel 40, 50 umfassen in der in Fig. 3 gezeigten Ausgestaltung einen Transmitter 40 einer induktiven Ladeeinrichtung und einen Anschluss für ein Ladekabel eines elektrischen Geräts.

Der Transmitter 40 der induktiven Ladeeinrichtung ist in der hier gezeigten Ausgestaltung vollständig in die Tischplatte des Stehtisches 10 integriert, d.h. sie ist von außen nicht sichtbar. In einer alternativen Ausgestaltung kann der Transmitter 40 in die Tischplatte des Stehtisches 10 integriert sein und an der Oberseite der Tischplatte mit einer Abdeckplatte abgedeckt sein.

Der Anschluss 50 für ein Ladekabel eines elektrischen Gerätes kann eine herkömmliche Steckdose oder einen USB-Anschluss bzw. Micro-USB-Anschluss umfassen. Alternativ können auch proprietäre Anschlüsse vorgesehen sein.

Durch Ablegen eines elektrischen Gerätes, etwa ein Smartphone, das einen Receiver einer induktiven Ladeeinrichtung aufweist, an der Oberfläche der Tischplatte im Bereich des Transmitters 40 kann das elektrische Gerät induktiv aufgeladen werden. Sollte das elektrische Gerät keinen Receiver einer induktiven Ladeeinrichtung aufweisen, kann das elektrische Gerät mit entsprechendem Ladekabel an dem Anschluss 50 aufgeladen werden. Die für das Aufladen der elektrischen Geräte benötigten elektrischen Energie wird von dem in das Möbel integrierten Speichermodul 20 bereitgestellt.

In einer alternativen Ausgestaltung der Erfindung kann das Speichermodul 20 auch an einer Oberfläche des Möbels 10 angeordnet sein, beispielsweise an der Unterseite der Tischplatte des Möbels 10. In diesem Fall ist das erfindungsgemäße Speichermodul 20 ebenfalls über elektrische Leitungen 30 mit den Übertragungsmitteln 40, 50 elektrisch verbunden. Das an der Oberfläche des Möbels 10 angeordnete erfindungsgemäße Speichermodul 20 kann beispielsweise mittels Klipse oder sonstiger Befestigungsmittel, die ein werkzeugloses Befestigen des Speichermoduls an dem Möbel ermöglichen, lösbar befestigt sein. Alternativ können auch Schraubverbindungen vorgesehen sein, um das Speichermodul 20 an dem Möbel zu befestigen.

Vorteilhaft ist es allerdings, wenn das Speichermodul 20 in das Möbel 10 integriert ist bzw. integrierbar ist, sodass das Speichermodul 20 von außen nicht sichtbar ist und das Möbel 10 seine ursprüngliche Form bzw. Oberfläche aufweist bzw. beibehält. Dies wird dadurch erreicht, indem das erfindungsgemäße Speichermodul 20 in einer Aussparung 15 des Möbels 10 angeordnet wird und das Speichermodul 20 eine Abdeckplatte 25 aufweist, die im Wesentlichen die Oberfläche des Möbels im Bereich der Aussparung wiederherstellt und die Aussparung abdeckt.

Ein weiterer Vorteil der Integration des Speichermoduls in das Möbel 10 liegt darin, dass das Speichermodul vor äußeren Einflüssen, etwa Gewalteinwirkung, effektiv geschützt ist. Ferner kann durch die Integration des Speichermoduls in das Möbel einen Diebstahl des Speichermoduls effizient entgegengewirkt werden.

In einer Ausgestaltung der Erfindung kann an dem Möbel 10 ein Anschlussmittel 60, etwa eine Steckdose, vorgesehen sein, die über elektrische Leitungen mit dem erfindungsgemäßen Speichermodul 20 elektrisch verbunden ist. Die Steckdose 60 kann beispielsweise vorgesehen sein, um das in das Möbel 10 integrierte Speichermodul 20 an eine externe Stromversorgung anzuschließen und das Speichermodul 20 aufzuladen. Dies ist insbesondere dann vorteilhaft, wenn das Speichermodul 20 so in das Möbel 10 integriert ist, dass es nicht von dem Möbel entfernt werden kann. Das Speichermodul 20 weist hierbei eine für das Aufladen des Speichermoduls 20 erforderliche Elektronik auf. Damit kann das Möbel 10 über die Steckdose 60 an eine externe Stromversorgung angeschlossen werden, um das Speichermodul aufzuladen. Nach Beendigung des Ladevorganges kann das Möbel wieder von der externen Stromversorgung getrennt werden. Damit kann das erfindungsgemäße Möbel nach dem Aufladen des Speichermoduls bestimmungsgemäß verwendet werden, ohne dass störende Stromkabel von dem Möbel wegführen.

**Fig. 4** zeigt ein alternatives erfindungsgemäßes Möbel 10.

Bei dem in Fig. 4 gezeigten Möbel handelt es sich um einen Schreibtisch 10, der zwei oder mehrere Tischbeine aufweist. In einem Tischbein ist das erfindungsgemäße Speichermodul 20 integriert. Auch hier kann das Speichermodul 20 lösbar in das Tischbein integriert sein oder so in das Tischbein integriert sein, dass es nicht vom Möbel 10 entfernt werden kann. Bei der nicht entfernbaren Variante ist es wiederum vorteilhaft, wenn in dem Möbel 10 ein Anschlussmittel, etwa eine Steckdose 60, angeordnet ist, das elektrisch mit dem Lademodul 20 gekoppelt ist.

Auch bei dem in Fig. 4 gezeigten erfindungsgemäßen Möbel kann das Speichermodul 20 in einer alternativen Ausgestaltung auch an einer Unterseite der Tischplatte befestigt sein, wie mit Bezug auf Fig. 3 erläutert.

Das Speichermodul 20 ist über in das Möbel 10 integrierte elektrische Leitungen 30 mit Übertragungsmittel 40, 50 elektrisch verbunden, wobei auch bei der in Fig. 4 gezeigten Ausgestaltung die Übertragungsmittel einen Transmitter 40 einer induktiven Ladeeinrichtung und einen Anschluss für ein Ladekabel eines elektrischen Gerätes umfassen.

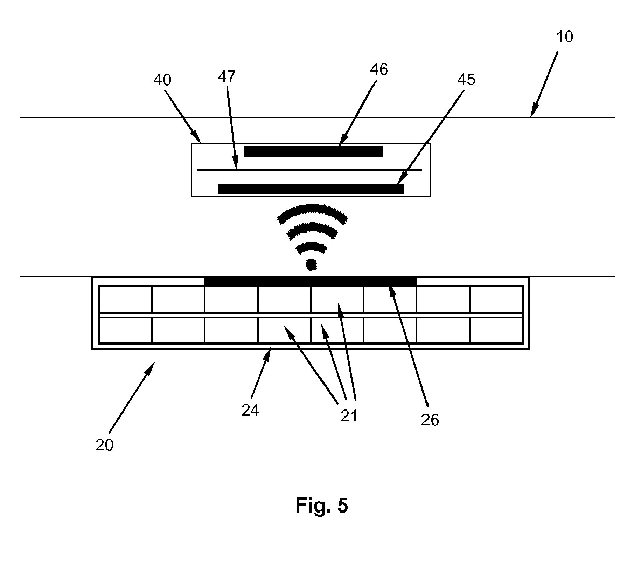

**Fig. 5** zeigt ein erfindungsgemäßes Speichermodul 20, das an einer Unterseite einer Möbelplatte eines Möbels 10 angeordnet ist. Alternativ kann das Lademodul 20 auch in einer Aussparung an der Unterseite der Möbelplatte des Möbels 10 angeordnet sein.

Das Lademodul 20 weist ein Gehäuse 24 auf, in dem die Speichermittel 21 des Lademoduls 20 angeordnet sind. Ferner ist in dem Gehäuse 24 eine Primärspule bzw. Transmitterspule einer induktiven Ladeeinrichtung angeordnet, die zur Seite des in der Möbelplatte integrierten Übertragungsmittel 40 hin ausgerichtet ist. In dem Bereich der Transmitterspule 26 weist das Gehäuse 24 ein Material auf, das eine induktive Energieübertragung zwischen dem Speichermodul 20 und dem Übertragungsmittel 40 ermöglicht.

Das Übertragungsmittel kann eine Sekundärspule bzw. Receiverspule 45 aufweisen, die mit der Transmitterspule 26 des Speichermoduls 20 zusammenwirkt und über die eine induktive Energieübertragung zwischen dem Speichermodul 20 und dem Übertragungsmittel 40 abgewickelt wird. Ferner kann das Übertragungsmittel 40 eine Primärspule bzw. Transmitterspule 46 aufweisen, über die eine Energieübertragung auf induktiver Basis zwischen dem Übertragungsmittel 40 und einem an der Oberseite der Möbelplatte abgelegten elektrischen Gerät abgewickelt wird, sofern das elektrische Gerät für eine induktive Energieübertragung angepasst ist. Zwischen der Transmitterspule 46 des Übertragungsmittels und der Receiverspule 45 des Übertragungsmittels 40 ist vorteilhafterweise eine Abschirmung 47 angeordnet, die beide Spulen gegenseitig abschirmt.

Gegenüber einer Lösung, bei der das erfindungsgemäße Speichermodul über elektrische Leitungen mit dem Übertragungsmittel gekoppelt ist, weist die in Fig. 5 gezeigte Lösung den Nachteil auf, dass der gesamte Wirkungsgrad geringer sein kann. Die Lösung in Fig. 5 hat allerdings den Vorteil, dass, sofern die Übertragungsmittel eine Receiverspule 45 aufweisen, eine Ad-hoc-Stromversorgung des Übertragungsmittels 40 möglich ist, beispielsweise wenn ein mit dem Übertragungsmittel 40 über elektrische Leitungen gekoppeltes und in das Möbel integriertes Speichermodul beispielsweise aufgrund eines Defektes ausfällt und kein Ersatzspeichermodul zur Verfügung steht, das als Ersatz in das Möbel integriert werden kann.

Das in Fig. 5 gezeigte Speichermodul 20, das eine induktive Energieübertragung ermöglicht, hat hierbei den wesentlichen Vorteil, dass dieses Speichermodul unabhängig von irgendwelchen elektrischen Anschlüssen und unabhängig von der Größe irgendwelcher Aussparungen in dem Möbel 10 an dem Möbel angeordnet werden kann, wobei lediglich darauf zu achten ist, dass das Speichermodul an dem Möbel befestigbar ist. In einer einfachen Ausführungsform können an dem Gehäuse eine Anzahl von Saugnäpfen vorgesehen sein, mit denen das Speichermodul an dem Möbel befestigbar ist. Damit wird auch vermieden, dass irgendwelche Befestigungseinrichtungen an dem Möbel vorgesehen werden müssen.

Vorstehend ist das erfindungsgemäße Möbel und das erfindungsgemäße Speichermodul am Beispiel eines Stehtisches beschrieben worden. Die Erfindung ist allerdings nicht auf Stehtische beschränkt. Vielmehr können unterschiedliche Möbel, beispielsweise Bücherregale, Nachttische, Rollcontainer, Schreibtische oder sonstige Möbel, die eine Ablagefläche zur Ablage elektrischer Geräte aufweisen, beispielsweise Küchenarbeitsplatten, erfindungsgemäß ausgestaltet sein und mit einem erfindungsgemäßen Speichermodul ausgestattet sein.

Ferner ist vorstehend ein Speichermodul beschrieben worden, das Anschlusskontakte 22 aufweist, die mit in der Aussparung 15 des Möbels 10 vorgesehenen Anschlusskontakten 16 korrespondieren. Anstelle dieser Anschlusskontakte können auch Steckverbindungen oder sonstige Verbindungsmittel vorgesehen sein, mit denen das Speichermodul 20 mit den in das Möbel integrierten elektrischen Leitungen verbindbar sind.

Des Weiteren sind in Fig. 2 und Fig. 5 erfindungsgemäße Speichermodule gezeigt, die jeweils eine bestimmte Anzahl von Speichermittel, etwa Akkumulatoren 21, aufweisen. Je nach konkreter Anforderung an die Kapazität bzw. Leistung des Speichermoduls 20 können mehr oder weniger Speichermittel 21 vorgesehen sein, als in Fig. 2 bzw. Fig. 5 gezeigt. Ob die Akkumulatoren 21 seriell und/oder parallel geschaltet werden, hängt ebenfalls von der konkreten Anforderung an die Kapazität bzw. Leistung des Speichermoduls ab.

In einer vorstehend nicht gezeigten Ausgestaltung der Erfindung kann das Speichermodul 20 ein Anschlusskabel aufweisen, mit dem das Speichermodul an ein Möbel 10 angeschlossen werden kann. Hierbei kann das Möbel 10 beispielsweise eine Steckdose aufweisen, die über elektrische Leitungen mit den Übertragungsmitteln 40, 50 gekoppelt ist. Ähnlich wie bei dem in Fig. 5 gezeigten Speichermodul kann so eine Ad-hoc-Energieversorgung bereitgestellt werden, wenn beispielsweise das integrierte Speichermodul defekt ist.

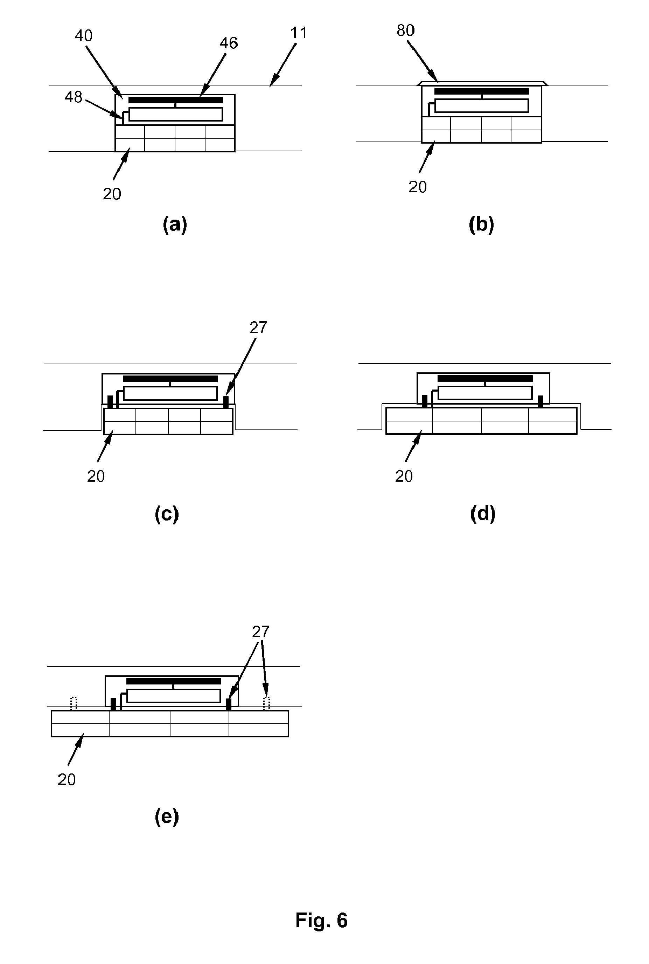

**Fig. 6** zeigt verschiedene Ausführungsbeispiele einer erfindungsgemäßen elektronischen Komponente, die in ein Möbel bzw. in eine Möbelplatte 11 eines Möbels integrierbar ist.

Die elektronische Komponente umfasst ein Übertragungsmittel 40, mit dem ein elektrisches Gerät, etwa ein Smartphone, aufgeladen werden kann. Das Übertragungsmittel umfasst bei der in Fig. 6 gezeigten Ausgestaltung der elektronischen Komponente einen Transmitter einer induktiven Ladeeinrichtung. Anstelle eines Transmitters kann auch ein Anschluss für ein Ladekabel, etwa ein USB-Anschluss vorgesehen sein, an den das elektrische Gerät über das Ladekabel angeschlossen werden kann.

Ferner umfasst die elektronische Komponente ein Speichermodul zum Speichern von elektrischer Energie und zum Abgeben der gespeicherten elektrischen Energie an das Übertragungsmittel 40.

Bei der in Abbildung (a) gezeigten Ausgestaltung der elektronischen Komponente sind der Transmitter 40 und das Speichermodul 20 als eine Einheit ausgeführt, wobei der Transmitter 40 über elektrische Verbindungen 48 mit dem Speichermodul 20 elektrisch gekoppelt ist. Die Einheit, bestehend aus dem Transmitter 40 und dem Speichermodul 20 kann in einem Gehäuse angeordnet sein, wobei an der Oberseite des Gehäuses die Primärspule bzw. die Transmitterspule 46 des Transmitters 40 angeordnet ist. Der Bereich des Gehäuses, dem die Transmitterspule 46 zugewandt ist, weißt ein Material auf, das eine induktive Energieübertragung an ein auf der Möbelplatte 11 abgelegtes elektrisches Gerät ermöglicht bzw. gewährleistet. Die elektronischen Komponenten des Transmitters und das Speichermodul 20 sind unterhalb der Transmitterspule 46 angeordnet.

Die erfindungsgemäße elektronische Komponente ist in einer an der Unterseite der Möbelplatte 11 vorgesehenen Aussparung anordenbar. Vorzugsweise ist die elektronische Komponente lösbar in der Aussparung anordenbar, sodass diese durch eine andere erfindungsgemäße elektronische Komponente ausgetauscht werden kann, beispielsweise dann, wenn das in der Aussparung angeordnete Speichermodul der elektronischen Komponente zum Aufladen aus der Aussparung entnommen werden muss.

In der Abbildung (b) ist eine alternative Ausgestaltung einer erfindungsgemäßen elektronischen Komponente gezeigt. Im Unterschied zu der in Abbildung (a) gezeigten elektronischen Komponente ist diese in einem Durchgangsloch der Möbelplatte 11 angeordnet, wobei auch hier die elektronische Komponente vorzugsweise lösbar in dem Durchbruch bzw. in dem Durchgangsloch angeordnet ist. Das Durchgangsloch kann unten und/oder oben offen sein.

An der Oberseite weist das Gehäuse eine Abdeckplatte 80 auf, die vorzugsweise randseitig an dem Gehäuse übersteht, sodass der überstehende Abschnitt der Abdeckplatte 80 beim Einschieben der elektronischen Komponente in das Durchgangsloch auf der Möbelplatte 11 aufliegt. Die elektronische Komponente kann so von oben in das Durchgangsloch eingeschoben werden. In dem Bereich der Transmitterspule 46 weist die Abdeckplatte 80 ein Material auf, das eine induktive Energieübertragung ermöglicht.

In einer Ausgestaltung der erfindungsgemäßen elektronischen Komponente kann die Abdeckplatte 80 lösbar an der elektronischen Komponente bzw. an dem Gehäuse der elektronischen Komponente anordenbar sein. Dadurch kann eine erfindungsgemäße elektronische Komponente mit unterschiedlichen Abdeckplatten 80, beispielsweise mit Abdeckplatten unterschiedlichen Durchmessers, bestückt werden, um die erfindungsgemäße elektronische Komponente in Möbelplatten mit unterschiedlich großen Durchgangslöchern integriert werden kann.

Die in dem Durchgangsloch angeordnete bzw. anordenbare elektronische Komponente kann auch nur die induktive Ladeeinrichtung umfassen, wobei die induktive Ladeeinrichtung (samt Transmitterspule) in einem Gehäuse angeordnet sein kann. Die induktive Ladeeinrichtung kann mit einem außerhalb des Gehäuse angeordneten bzw. anordenbaren Speichermodule koppelbar sein.

Bei der in Abbildung (c) gezeigten Ausgestaltung einer erfindungsgemäßen elektronischen Komponente ist das Speichermodul 20 lösbar an dem Transmitter 40 anordenbar. Dies hat den Vorteil, dass das Speichermodul 20 von dem Transmitter 40 abgenommen werden kann, um es einem Ladevorgang zuzuführen. Bei dieser Ausgestaltung kann der Transmitter 40 fest in einer an der Unterseite der Möbelplatte 11 vorgesehenen Aussparung angeordnet sein. An dem Transmitter 40 oder an dem Speichermodul 20 können Befestigungsmittel 27 vorgesehen sein, um das Speichermodul 20 lösbar an dem Transmitter zu befestigen. Ferner ist an dem Speichermodul 20 oder an dem Transmitter 40 ein Steckkontakt vorhanden, über den das Speichermodul 20 elektrisch mit dem Transmitter 40 koppelbar ist.

Die in Abbildung (c) gezeigte Ausgestaltung einer erfindungsgemäßen elektronischen Komponente kann auch in einem Durchgangsloch anordenbar sein, wie in Abbildung (b) gezeigt, wobei es dann vorteilhaft ist, wenn an dem Gehäuse der elektronischen Komponente bzw. an dem Gehäuse des Transmitters 40 ebenfalls eine Abdeckplatte 80 angeordnet wird.

In Abbildung (d) ist eine alternative Ausgestaltung der in Abbildung (c) gezeigten elektronischen Komponente gezeigt. Der Transmitter 40 der induktiven Ladeeinrichtung ist hier in einer an der Unterseite der Möbelplatte 11 vorgesehenen Aussparung angeordnet. Das Speichermodul 20 weist einen größeren Durchmesser als der Transmitter 40 auf bzw. ragt seitlich über den Transmitter 40 hinaus. Um auch das Speichermodul 20 weitgehend in die Möbelplatte 11 integrieren zu können, ist an der Unterseite der Möbelplatte 11 eine Aussparung vorgesehen, in die auch das Speichermodul 20 anordenbar ist.

Auch bei der in Abbildung (d) gezeigten Ausgestaltung der erfindungsgemäßen elektronischen Komponente ist das Speichermodul 20 über Befestigungsmittel 27 lösbar an dem Transmitter 40 anordenbar.

Bei der in Abbildung (e) gezeigten Ausgestaltung einer erfindungsgemäßen elektronischen Komponente ist der Transmitter 40 an der Unterseite der Möbelplatte 11 in einer Aussparung angeordnet. Über Befestigungsmittel 27 kann das Speichermodul 20 an der Unterseite der Möbelplatte 11 entweder an dem Transmitter 40 und/oder an der Unterseite der Möbelplatte 11 lösbar befestigt werden. Auch hier ist eine elektrische Verbindung 48 vorgesehen, mit der das Speichermodul 20 elektrisch mit dem Transmitter 40 koppelbar ist. Die in Abbildung (e) gezeigte Ausgestaltung einer erfindungsgemäßen elektronischen Komponente hat den Vorteil, dass diese in Möbelplatten integrierbar ist, die eine zu geringe Dicke aufweisen, um die gesamte elektronische Komponente in einer Aussparung der Möbelplatte anzuordnen.

Durch die lösbare Anordnung des Speichermoduls 20 an dem Transmitter 40 kann das Speichermodul 20 unabhängig von dem Transmitter 40 von dem Möbel bzw. von der Möbelplatte entfernt werden und beispielsweise einem Ladevorgang zugeführt werden.

Auch bei den in Abbildung (d) und (e) gezeigten Ausgestaltungen der erfindungsgemäßen elektronischen Komponenten können diese in einem Durchgangsloch einer Möbelplatte angeordnet werden, wobei an der Oberseite des Gehäuses der elektronischen Komponente vorzugsweise eine Abdeckplatte 80 angeordnet wird, wie mit Bezug auf Abbildung (b) gezeigt.

Die in Fig. 6 gezeigten Ausgestaltungen einer elektronischen Komponente mit einem Speichermodul 20 und einem Transmitter 40 haben den Vorteil, dass in dem Möbel bzw. in der Möbelplatte keine elektrischen Leitungen vorgesehen bzw. integriert werden müssen, über die der Transmitter elektrisch mit dem Speichermodul 20 verbunden ist bzw. verbindbar ist. Es muss lediglich eine Aussparung bzw. ein Durchgangsloch vorgesehen werden, in dem die elektronische Komponente angeordnet werden kann.

### Bezugszeichen:

- 10: Möbel, z.B. Stehtisch, Schreibtisch, Bücherregal, oder dergleichen
- 11: Möbelplatte eines Möbels
- 15: Aussparung am Möbel 10 zur Aufnahme des Speichermoduls 20
- 16: Anschlusskontakte in der Aussparung 15 (die mit den Anschlusskontakten 22 des Speichermoduls 20 korrespondieren)
- 20: Speichermodul zum Speichern von elektrischer Energie
- 21: Speichermittel (z.B. Akkumulator oder Batterie)
- 22: Anschlusskontakte des Speichermoduls 20
- 23: Arretiermittel bzw. Absperrmittel (Zylinderschloss)
- 24: Gehäuse des Speichermoduls 20
- 25: Abdeckplatte des Speichermoduls 20 (vorzugsweise angepasst an die Oberfläche des Möbels 10)
- 26: Primärspule (Transmitterspule) des Speichermoduls 20
- 27: Befestigungsmittel zum Befestigen des Lademoduls 20 an dem Übertragungsmittel 40
- 30: elektrische Leitungen
- 40: Übertragungsmittel - Transmitter einer induktiven Ladeeinrichtung
- 45: Sekundärspule (Receiverspule) des Transmitter 40
- 46: Primärspule (Transmitterspule) des Transmitters 40
- 47: Abschirmung zwischen Sekundärspule 45 und Primärspule 46
- 48: elektrische Verbindungen zwischen Übertragungsmittel 40 und Speichermodul 20
- 50: Übertragungsmittel - Anschluss für Ladekabel (z.B. USB, Micro-USB oder Steckdose)
- 60: Anschlussmittel (z.B. Steckdose)
- 70: Signalisierungsmittel (z.B. LED)
- 80: Abdeckplatte des Übertragungsmittels 40

## Patentansprüche

1. Möbel (10), insbesondere Tisch, Stehtisch oder Schreibtisch, **dadurch gekennzeichnet, dass** an oder in dem Möbel ein Speichermodul (20) zum Speichern von elektrischer Energie und zur Abgabe der gespeicherten elektrischen Energie an ein an dem Möbel anordenbaren elektrischen Gerät anordenbar ist.

2. Möbel nach dem vorhergehenden Anspruch, wobei das Möbel eine Aussparung (15) oder ein Durchgangsloch aufweist, in der bzw. in dem das Speichermodul (20), vorzugsweise lösbar anordenbar ist.

3. Möbel nach einem der vorhergehenden Ansprüchen, wobei in oder an dem Möbel (10) Übertragungsmittel (40; 50) angeordnet oder anordenbar sind, die mit dem Speichermodul (20) koppelbar sind und die angepasst sind, die von dem Speichermodul (20) abgegebene elektrische Energie an das an dem Möbel anordenbaren elektrische Gerät zu übertragen, wobei die Übertragungsmittel einen Transmitter (40) eines induktiven Ladesystems oder einen Anschluss für ein Ladekabel des elektrischen Geräts umfassen.

4. Möbel nach dem vorhergehenden Anspruch, wobei in dem Möbel elektrische Leitungen (30) angeordnet sind, die das Speichermodul (20) mit den Übertragungsmitteln (40; 50) elektrisch verbinden.

5. Möbel nach einem der Ansprüche 2 bis 4, wobei in der Aussparung (15) bzw. in dem Durchgangsloch Anschlusskontakte (16) angeordnet sind, die mit Anschlusskontakten (22) des Speichermoduls (20) korrespondieren und mit diesen zusammenwirken, wenn das Speichermodul (20) in der Aussparung (15) bzw. in dem Durchgangsloch angeordnet ist, wobei die in der Aussparung (15) bzw. in dem Durchgangsloch angeordneten Anschlusskontakte (16) mit den elektrischen Leitungen (30) gekoppelt sind.

6. Möbel nach einem der Ansprüche 2 bis 5, wobei die Aussparung (15) bzw. das Durchgangsloch mit einer Abdeckplatte (25) abdeckbar und/oder verschließbar ist, wobei die Abdeckplatte (25) vorzugsweise Teil des Speichermoduls (20) ist, und wobei die Abdeckplatte (25) vorzugsweise Arretiermittel (23) aufweist, mit denen die Abdeckplatte am Möbel (10), insbesondere an oder in der Aussparung (15) bzw. an oder in dem Durchgangsloch arretierbar ist, wobei die Arretiermittel (23) vorzugsweise ein Absperrmittel, insbesondere ein Schloss umfassen.

7. Speichermodul (20) für ein Möbel (10) nach einem der vorhergehenden Ansprüche, wobei das Speichermodul angepasst ist zum Speichern von elektrischer Energie und zur Abgabe der gespeicherten elektrischen Energie an ein Endgerät, das an oder auf dem Möbel anordenbar ist, **dadurch gekennzeichnet, dass** das Speichermodul in das Möbel (10) integrierbar ist und mit im oder am Möbel angeordneten Übertragungsmittel (40; 50), die angepasst sind, die von dem Speichermodul (20) abgegebene elektrische Energie an das an oder auf dem Möbel angeordnete elektrische Gerät zu übertragen, elektrisch koppelbar ist.

8. Speichermodul nach dem vorhergehenden Anspruch, wobei das Speichermodul (20) über im Möbel (10) angeordnete elektrische Leitungen (30) mit den Übertragungsmitteln (40; 50) elektrisch koppelbar ist.

9. Speichermodul nach Anspruch 7, wobei das Speichermodul (20) auf induktiver Basis mit den Übertragungsmitteln (40; 50) elektrisch koppelbar ist, wobei das Speichermodul (20) zumindest eine Transmitterspule (26) aufweist, über die die elektrische Energie des Speichermoduls an die Übertragungsmittel (40; 50) übertragen wird.

10. Speichermodul nach einem der Ansprüche 7 bis 9, wobei an dem Speichermodul (20) eine Abdeckplatte (25) angeordnet ist, wobei die Abdeckplatte (25) hinsichtlich ihrer Abmessungen angepasst ist, beim Anordnen des Speichermoduls (20) in einer Aussparung (15) oder in einem Durchgangsloch des Möbels (10) die Aussparung oder eine Seite des Durchgangsloches zu verschließen, und wobei die Abdeckplatte (25) vorzugsweise Arretiermittel (23) aufweist, mit denen die Abdeckplatte am Möbel (10), insbesondere an oder in der Aussparung (15) oder an einer Seite des Durchgangsloches arretierbar ist, wobei die Arretiermittel (23) vorzugsweise ein Absperrmittel, insbesondere ein Schloss umfassen.

11. Speichermodul nach einem der Ansprüche 7 bis 10, wobei das Speichermodul (20) mit einer externen Ladeeinrichtung verbindbar ist, um das Speichermodul aufzuladen, oder wobei das Speichermodul (20) eine interne Ladeeinrichtung aufweist, die mit einer externen Stromversorgung verbindbar ist, um das Speichermodul aufzuladen.

12. Speichermodul nach einem der Ansprüche 7 bis 11, wobei das Speichermodul Anschlusskontakte (22) aufweist, die mit in der Aussparung (15) bzw. in dem Durchgangsloch des Möbels (10) angeordneten Anschlusskontakten (16) korrespondieren und mit diesen zusammenwirken, wenn das Speichermodul (20) in der Aussparung (15) bzw. in dem Durchgangsloch angeordnet ist, wobei die Anschlusskontakte (16) vorzugsweise mit den im oder am Möbel angeordneten Übertragungsmittel (40; 50) elektrisch gekoppelt sind.

13. Speichermodul nach einem der Ansprüche 7 bis 12, wobei dieses ein Signalisierungsmittel (70) aufweist, das angepasst ist, einen Ladungszustand des Speichermoduls (20) zu signalisieren, wobei das Signalisierungsmittel (70) vorzugsweise an der Abdeckplatte (25) angeordnet ist, und vorzugsweise eine lichtemittierende Diode umfasst.

14. Elektronische Komponente zur induktiven Übertragung von elektrischer Energie an ein relativ zur elektronischen Komponente anordenbares elektrisches Gerät, insbesondere zum Aufladen eines Energiespeichers des elektrisches Gerätes, wobei die elektronische Komponente einen Transmitter (40) einer induktiven Ladeeinrichtung und ein Speichermodul (20) umfasst, wobei das Speichermodul (20) angepasst ist, zum Speichern von elektrischer Energie und zur Abgabe der gespeicherten elektrischen Energie an den Transmitter (40), und wobei die elektronische Komponente zumindest teilweise in einer Aussparung oder in einem Durchgangsloch einer Möbelplatte (11) eines Möbels (10) anordenbar, vorzugsweise lösbar anordenbar ist.

15. Möbelsystem, umfassend ein Möbel (10) nach einem der Ansprüche 1 bis 6 und zumindest ein Speichermodul (20) nach einem der Ansprüche 7 bis 13 und/oder zumindest eine elektronische Komponente nach Anspruch 14, wobei das zumindest eine Speichermodul und/oder die zumindest eine elektronische Komponente in das Möbel integrierbar sind, vorzugsweise in einer Aussparung (15) oder in einem Durchgangsloch des Möbels (10) anordenbar sind.
